# EUROPEAN PATENT APPLICATION

(11) **EP 0 807 938 A1**
(43) Date of publication of application: **19.11.1997**
(21) Application number: 96830279.4
(22) Date of filing: 14.05.1996
(51) Int. Cl.: H01B 12/14

(54) **A duct structure for the mechanical containment and thermal insulation of electrical superconductors cooled with cryogenic fluid**

(71) Applicant: FINMECCANICA S.p.A. AZIENDA ANSALDO, I-16128 Genova (IT)
(72) Inventor: Bado, Giuseppe, 16137 Genova (IT); Vivaldi, Franco, 16123 Genova (IT)
(74) Representative: Falcetti, Carlo

(57) **Abstract**

A duct structure (1) for mechanical containment and thermal insulation of electrical superconductors (18,20) comprises first and second coaxial thermal insulation ducts radially separated from one another, each comprising an inner tubular element (2,4) and an outer tubular element (3,5) separated by radial centring means (6) of low thermal conductivity to form cavities (8,9). Advantageously the tubular elements (2,3,4,5) have rectilinear axial lengths (A) of high rigidity alternating with flexible lengths (B) having corrugations substantially transverse the axial direction (Y-Y) which allow the formation of a rigid duct structure (1) which at the same time is able to adapt itself to radii of curvature imposed by the conditions of laying and use.

## Description

The present invention relates to a duct structure for the mechanical containment and thermal insulation of electrical superconductors cooled with a cryogenic fluid in the supercritical gaseous state during the transport of electrical energy.

It is known that the necessity of exchanging significant quantities of electrical energy between geographical regions with different daily cycles of consumption and/or different production capacity requires the use of means able to transfer electrical power of at least several hundreds of MW.

This transfer is normally effected by utilising overhead lines of resistive type, but there are, however, in practical reality situations in which particular requirements make the transmission of electrical energy using subterranean or submarine cables obligatory even though this involves installation costs per unit length very much greater than those of overhead lines. One example of such situation is when crossing sections of sea or traversing densely inhabited regions or those with strongly scenic constraints.

For such cables there is the constant requirement to improve their performance which means the capacity of the individual cable to transmit high electrical power with high efficiency so as to minimise the number of cables needed.

Cables currently used for the transport of electrical energy utilise resistive conductors which, during the passage of current, cause significant energy losses due to heating by the joule effect. Consequently, with cables of resistive type the transport of electrical energy is effected at low current density and at high voltage in such a way as to reduce the said energy losses as much as possible.

From what has been said, by making maximum currents of the order of a thousand Amperes pass through the conductors, the limit of transmissible power with resistive cables, about 600 MW, is determined by the difficulty of guaranteeing the electrical insulation of the cable with technically and economically acceptable arrangements, for operating voltages greater than 600 kV.

One solution for increasing the maximum transmissible power through each individual cable, without increasing the energy losses, is represented by the possibility of replacing the resistive materials normally used within the cable with superconductor materials. Such materials, in fact, if used at temperatures less than their critical temperature, which is of the order about 10 Kelvin, present the phenomenon of super conductivity in which the electrical resistance of the superconductor falls practically to zero. This makes it possible to eliminate the said energy losses during the passage of current with the consequent possibility of increasing the operating current within the cable up to several tens of kA.

Since, for lengths of cable greater than tens of km, the presence of reactive currents makes the transmission of power in DC necessary, the best transport conditions, when superconductor materials are used, is obtained with cables having high current density and DC (HCDC) cooled with cryogenic fluid, for example helium, in the supercritical gaseous state. With the operating voltage in the cable limited to a few tens of kV it is now possible to achieve transport capacities of several GW for each cable without having the said problems of electrical insulation. It is appropriate to underline that in order to overcome the negative environmental impact caused by earthing high currents, the transmission system must provide two conductors of opposite polarities so as to avoid earthing of the electrical circuit.

The use of cables employing superconductor materials makes it possible to obtain a significant improvement in the efficiency of electrical energy transport as previously defined. However, the use of superconductor materials for the production of cables intended for the transmission of electrical energy has one critical aspect, from the point of view of the economic convenience of their use in respect of resistive cables, in the cooling system of the cryogenic fluid and in the quantity of energy necessary to obtain this cooling. In fact, if the structure of the cable is not able to guarantee an optimum thermal insulation such as to minimise the arrival of heat from the outside, the cooling of the superconductors to temperatures lower than their critical temperature requires a high consumption of energy which cancels the advantages achievable from the absence of joule effect losses. Consequently, the possibility of increasing the transmission efficiency and the limited length of a superconductor cable, up to values which become interesting from a system and economic point of view, depends on the type of structure adopted for the cable.

By the term "transmission efficiency", in the case of a superconductor cable, is meant the ratio between the energy transmitted and the sum of the energy transmitted and the energy necessary to obtain cooling of the superconductors, the energy dissipated by the joule effect being negligible, whilst by "limited lengths" is meant the maximum distance between two cooling stations between which it is still possible to maintain the operative temperature of the superconductors in the intermediate zones more distant therefore from the cooling stations.

Until now there have been proposed and produced prototypes of different types of superconductor cable which can be divided fundamentally into two different constructional solutions. The first refers to superconductor cables made with coaxial ducts having a flexible structure, which adapt perfectly to the different local requirements of laying but require a short axial pitch between the radial centring spacers interposed between the coaxial ducts such that, through these centring spacers, heat can get in from the outside such as to render these cables hardly competitive with respect to those having resistive electrical conductors. The second type refers to superconductors having a rigid structure which allows the production of cables having an optimum thermal insulation of the superconductors from the outside but presents considerable difficulties in adopting curvatures such as those to which a cable is subject during the laying operation, for example in a submarine section.

The limits listed above constitute a serious and effective obstacle to the commercial use of cables made up to now with superconductor materials in place of those of resistive type, for the transmission of electrical energy.

The object of the present invention is that of providing a duct structure for the mechanical containment and thermal insulation of electrical superconductors, cooled during the transport of electrical energy by a cryogenic fluid so as to operate at a temperature at which they present the phenomenon of superconductivity; the characteristics of the duct structure must permit it to adapt itself to curvatures required during laying and must allow the transmission of electrical energy in an economically advantageous manner even over long distances exceeding the limits just cited of the most pertinent known art. The invention therefore proposes to provide a duct structure which satisfies the following fundamental requirements: to allow the cooling of the electrical superconductors with cryogenic gas in the supercritical state, to require a cooling power compatible with criteria of economy of use in place of resistive cables, to allow them to adapt to radii of curvature required during laying, and to permit the compensation of thermal contractions within the duct.

This object is achieved by a duct structure for the mechanical containment and thermal insulation of electrical superconductors of the type comprising at least one electrical superconductor surrounded by electrical insulation and contained in a first thermal insulation duct through which flows a first flow of cryogenic fluid, characterised by the fact that the said first thermal insulation duct includes at least two coaxial tubular elements having, in an axial direction, rectilinear lengths of high rigidity alternating with flexible lengths having corrugations substantially transverse the axial direction.

Preferably, the said duct structure includes a second thermal insulation duct containing the said first duct and including at least two coaxial tubular elements having, in the axial direction, rectilinear lengths of high rigidity alternating with flexible lengths having corrugations substantially transverse the axial direction, the said first and second ducts being separated by radial spaces so as to define an annular channel for the passage of a further flow of cryogenic fluid.

To understand the invention and its advantageous aspects a detailed description of a preferred embodiment is hereinafter provided by way of non-limitative example with reference to the attached drawings, in which:

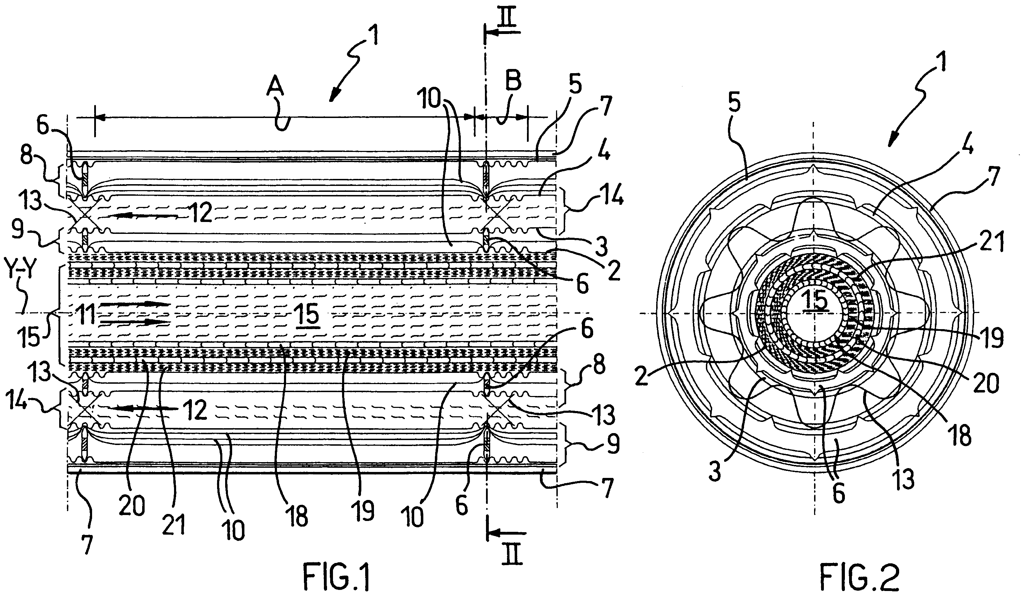

- Figure 1 is a longitudinal section showing a schematic view of the duct structure according to the invention;
- Figure 2 is a transverse section showing a view of the duct structure of Figure 1 with the section taken on the line II-II;

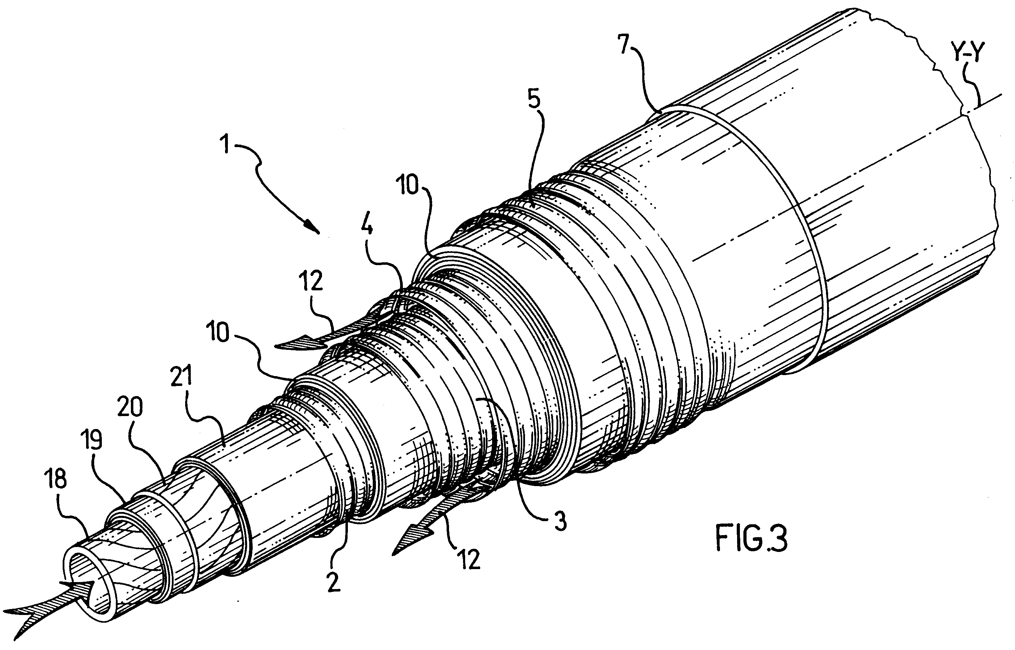

- Figure 3 is a perspective view of the principal elements of the duct structure of Figure 1;

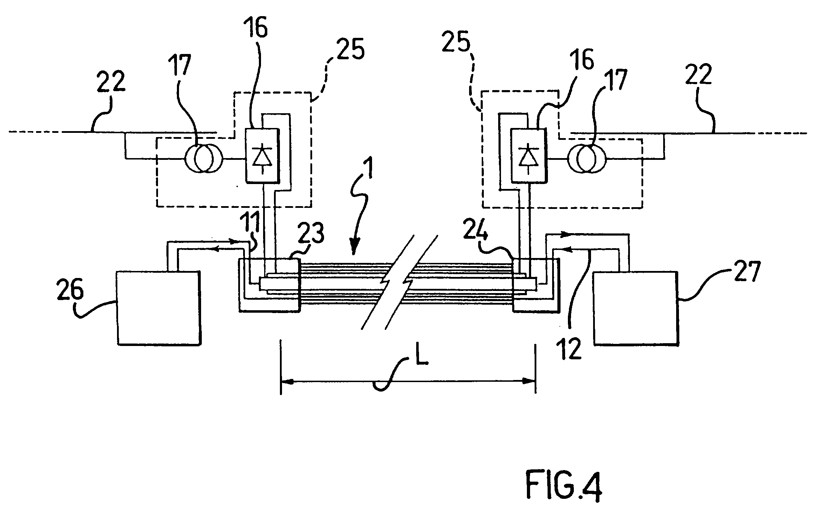

- Figure 4 is a schematic representation of an energy transmission system utilising the duct structure of Figure 1.

With reference to Figures from 1 to 3, the reference numeral 1 generally indicates a duct structure according to the invention for the mechanical containment and thermal insulation of electrical superconductors. The duct structure 1 has an axis Y-Y and includes first and second coaxial thermal insulation ducts radially spaced from one another, the first of which is within the second. The first and second thermal insulation ducts comprise an internal tubular element respectively 2 and 4, and an external tubular element, respectively 3 and 5 formed from a strip of stainless steel sheet by longitudinal rolling with continuous and controlled welding.

In the axial direction Y-Y the tubular elements 2, 3, 4 and 5 have rectilinear lengths of high rigidity alternating with flexible lengths provided with circumferential corrugations. The circumferential corrugations of the tubular elements 2, 3, 4 and 5 are obtained by transverse rolling of the said sheet metal strip and have a shape such as to satisfy the normal mechanical stress criteria.

The distance A between two consecutive corrugated lengths of the said tubular elements depends on the average radius of curvature which the duct structure 1 must assume, whilst the length B of the corrugated lengths, the form of the circumferential corrugations and the number of corrugations in each corrugated length allow elastic deformation of the duct structure 1 in such a way that between two consecutive rectilinear lengths it is possible to form an angle such as to approximate with a polygonal the average curvature required during laying.

The corrugated lengths also act to allow the correct compensation of the axial thermal contractions of adjacent rectilinear lengths since, as will become more apparent in the following description, whilst the internal elements operate at cryogenic temperatures the tubular element 5 works at a temperature close to ambient temperature.

The tubular elements of each thermal insulation duct are separated by radial centring and axial retention and locking means of low thermal conductivity, of type known per se, so as to define respective cavities 8 and 9.

Preferably the said radial centring means comprise an annular structure 6 of material having a very low thermal conductivity, for example glass resin which, suitably anchored between the circumferential corrugations of the tubular elements 2, 3, 4 and 5, prevents axial sliding between these, constituting axial retention and locking means.

After laying the duct structure 1 the cavities 8 and 9 are evacuated and maintained under vacuum so as to make them thermally insulating. By way of indication, the pressure value to be maintained within the said cavities 8 and 9 must be less than 10⁻⁴ millibar. To increase further the thermal insulation, screens 10 are fitted within the cavities 8 and 9 for reflecting thermal radiation, typically made from several layers of aluminium strip alternating with layers of spacer material such as glass fibre.

The tubular elements 2, 3, 4 and 5 have an outer wrapping, not shown in the drawings for simplicity of representation, which is made with braid of stainless steel and ensures the absorption of axial tension loads in the said corrugated lengths.

The first and second thermal insulation ducts are radially separated by radial spacers 13 which, for reasons which will become more apparent in the following description, are of low hydrodynamic resistance type. By way of example, the radial spacers 13 can be formed by baskets of stainless steel fixed mechanically or by welding to the tubular elements 3 and 4 of the first and second thermal insulation ducts respectively in correspondence with the lengths B with circumferential corrugations. Between the tubular elements 3 and 4 there is thus defined an annular channel 14.

The innermost tubular element 2 of the duct structure 1 defines a channel 15 which contains within it an electrical conductor 18 of mixed structure of copper and superconductor formed by strips of rectangular length helically wound in such a way as to form a flexible cylindrical duct and with arrangements of known type for preventing the collapse of the cylindrical structure onto itself, a layer of fibrous electrical insulating material 19 permeable to cryogenic fluids wound around the conductor 18, a second electrical conductor 20 similar to and coaxial with the conductor 18 and a further layer of electrical insulation 12.

The structure of the tubular element 2 allows the efficient axial retention of the ducts and the insulations contained within it to be ensured by the said circumferential corrugations.

Externally, the tubular element 5 is clad in a protective sheath 7 of plastics material, for example of high density polyethylene terephthalte (PET HD).

With reference to Figures from 1 to 4, an energy transmission system comprises a duct structure 1 according to the present invention, of length L having cryostat terminals 23 and 24 at its ends. Such cryostats are connected to electrical energy transmission/reception stations 25 and respective refrigeration/pumping stations 26 and 27 for cryogenic fluid.

The electrical stations 25 are connected to the AC electrical network 22 and each comprises a transformer 17 and a rectifier/inverter unit 16.

During the transport of energy the refrigeration and pumping station 26 supplies one end of the channel 15 of the duct structure 1 with a delivery flow 11 of cryogenic fluid, for example helium at high pressure and at a cryogenic temperature so as to cool the ducts 18 and 20 below their critical temperature. The strips of the electrical conductor 18 in fact permit the radial passage of cryogenic fluid which, after having impregnated the electrical insulating layer 19 also flows over and therefore cools also the electrical conductor 20.

At the opposite end of the duct structure 1 the delivery flow of cryogenic fluid arrives at the cooling stations 27 where it is reconditioned to optimum pressure and temperature and then returned as a return flow 12 to the station 26 through the said annular channel 14 of the duct structure 1.

The return flow 12 allows the closed cycle circulation of the cryogenic fluid within the transmission system and acts as an outer thermal screen for the delivery flow 11 of cooling fluid and for the electrical superconductors 18 and 20.

The above-described duct structure 1 is particularly advantageous; in fact, the rectilinear lengths A of the tubular elements confer on the duct structure 1 the necessary rigidity to be able to limit the number of radial centring means 6 within the cavities 8 and 9, whilst the corrugated lengths B allow them to assume radii of curvature required by the local conditions during laying. Advantageously, the lengths B of the tubular elements, with circumferential corrugations, also allow compensation of thermal contractions of the adjacent rectilinear lengths A.

From what has been said it is evident that in the highly rigid rectilinear lengths it is possible to increase the axial pitch between the radial centring means so as to reduce the number of these per unit length of the duct. The maximum axial pitch allowed between the radial centring means is in fact limited in the duct structure described only by the differential component of the deflection (sag) due to the weight of the components of the duct structure 1, which differential component diminishes with an increase of the rigidity of the duct structure.

It is evident that with the reduction in the necessary radial centring means and consequently of the arrival of heat from outside through them, in combination with the effective outer thermal screening action performed by the return flow of cooling cryogenic fluid it is possible to achieve a significant improvement in the thermal insulation of the duct structure according to the invention over prior art flexible ducts.

As can be appreciated from what has been described the duct structure according to the invention makes it possible to achieve the said objects. In fact, the possibility of providing a rigid duct structure which at the same time is able to adapt itself to the radii of curvature imposed by the conditions during laying and in use, and the thermal insulation from the exterior which can be achieved, makes it possible to utilise the duct structure according to the invention to transport electrical powers of the order or several GW even over long distances thereby improving the economic convenience of the system with respect to prior art arrangements.

Another advantage of the duct structure according to the invention lies in the fact that it makes it possible to effect transport of electrical energy by DC current with two conductors of opposite polarity contained in the same duct structure thereby optimising the use of the cooling cryogenic fluid.

Further, with the duct structure according to the invention it is possible to effect interruption and reinstatement of the forming operations, for example for a submarine cable.

It is evident that the preferred embodiment of the duct structure according to the invention and described above by way of illustrative and non-limitative example can, be modified by the man skilled in the art for the purpose of satisfying contingent and specific requirements, by adapting and replacing elements with other functionally equivalent elements without, however, departing from the ambit of protection of the invention as defined in the following claims.

Thus, for example, the radial centring annular structure 6 can be replaced by another known system such as, for example, a braided cord made from insulating wires wound in a spiral about the tubular element 2 and 4.

In the flexible lengths of the tubular elements the circumferential corrugations can be replaced by helical corrugations of small pitch.

Further, the screens for reflecting thermal radiation can be made with different known techniques such as strips of aluminised nylon or thin sheets of aluminium alternating with glass fibre.

## Claims

1. A duct structure for the mechanical containment and thermal insulation of electrical superconductors of the type including at least one electrical superconductor (18,20) surrounded by electrical insulation (19,21) and contained in a first thermal insulation duct through which flows a first flow (11) of a cryogenic fluid, characterised in that the said first thermal insulation duct comprises at least two coaxial tubular elements (2,3) having, in an axial direction (Y-Y), rectilinear lengths (A) of high rigidity alternating with flexible lengths (B) having corrugations substantially transverse the axial direction (Y-Y).

2. A duct structure according to Claim 1, characterised in that it includes a second thermal insulation duct containing the said first duct and including at least two coaxial tubular elements (4,5) having, in the axial direction (Y-Y), rectilinear lengths (A) of high rigidity alternating with flexible lengths (B) having corrugations substantially transverse the axial direction (Y-Y), the said first and second ducts being separated by radial spacers (13) so as to define an annular channel (14) for the passage of a second flow of the said cryogenic fluid.

3. A duct structure according to Claim 2, characterised in that the said flexible lengths (B) of the tubular elements (2,3) of the said first thermal insulation duct are axially positioned in correspondence with flexible lengths (B) of the tubular elements (4,5) of the said second thermal insulation duct.

4. A duct structure according to Claim 1 or Claim 2, characterised in that it includes tension-resisting means associated with the tubular elements (2,3,4,5) around the said flexible lengths (B) to absorb traction stresses on the duct structure (1) in the said flexible lengths (B).

5. A duct structure according to Claim 4, characterised in that the said tension-resisting means comprise a wrapping of steel braid fixed outside the tubular elements (2,3,4,5).

6. A duct structure according to Claim 1 or Claim 2, characterised in that the tubular elements (2,3,4,5) of the said first and second thermal insulation ducts are, respectively, separated from one another by radial centring means (6) so as to define cavities (8,9) between them.

7. A duct structure according to Claim 6, characterised in that the said radial centring means (6) are positioned in correspondence with the corrugations of the flexible lengths (B) of the tubular elements (2,3,4,5) to constitute axial retention and locking means which prevent axial sliding between the tubular elements (2,3,4,5).

8. A duct structure according to Claim 6, characterised in that the cavities (8, 9) include within them a thermal insulation layer (10) and a thermal radiation reflective layer.

9. A duct structure according to Claim 6, characterised in that the cavities (8,9) are evacuated and maintained under vacuum.

10. A duct structure according to Claim 1 or Claim 2, characterised in that the said corrugations are of circumferential type.

11. A duct structure according to Claim 1 or Claim 1, characterised in that the said tubular elements (2,3 and 4,5) are made of stainless steel sheet.
